# NEUE EUROPÄISCHE PATENTSCHRIFT

(11) **EP 1 989 136 B2**
(45) Veröffentlichungstag und Bekanntmachung des Hinweises auf die Entscheidung über den Einspruch: **25.02.2015**
(45) Hinweis auf die Patenterteilung: 23.02.2011
(21) Anmeldenummer: 06819521.3
(22) Anmeldetag: 15.11.2006
(51) Int. Cl.: B65H 19/10, C09J 7/02

(54) **KLEBEBAND UND SEINE VERWENDUNG**
ADHESIVE TAPE AND ITS USE
Ruban adhésif et son utilisation

(30) Priorität: 22.02.2006 DE 102006008561; 10.11.2006 DE 102006053439
(43) Veröffentlichungstag der Anmeldung: 12.11.2008
(73) Patentinhaber: TESA SE, 20253 Hamburg (DE)
(72) Erfinder: ELLRINGMANN, Kai, 22523 Hamburg (DE); ZÖLLNER, Stephan, 21244 Buchholz /Nordheide (DE); KRAWINKEL, Thorsten, 22457 Hamburg (DE); WULF, Stefan, 40166 Mönchengladbach (DE)
(86) Internationale Anmeldenummer: PCT/EP2006/068520
(87) Internationale Veröffentlichungsnummer: WO 2007/096010

(56) Entgegenhaltungen:
- EP-A1- 1 544 142
- EP-A2- 1 342 684
- WO-A2-03/000814
- US-A- 3 222 419
- US-A- 3 573 146
- US-A- 4 418 120
- US-A- 5 874 143
- US-A1- 2003 010 422
- US-A1- 2003 190 445
- US-A1- 2004 260 030
- US-A1- 2005 147 813
- US-B1- 6 277 488
- US-B2- 6 817 567
- US-B2- 6 926 959
- D. SATAS: 'Handbook of Pressure Sensitive Adhesive Technology', Bd. 2, 1989, VAN NOSTRAND REINHOLD, NEW YORK
- D. SATAS: 'Handbook of Pressure Sensitive Adhesive Technology', Bd. 3, 1999, VAN NOSTRAND REINHOLD, NEW YORK
- 'DIY Sealants, Tapes, Labels etc.' KRATON® POLYMERS März 2004, Seiten 2 - 8

## Beschreibung

Die Erfindung betrifft ein Klebeband für den fliegenden Rollenwechsel von auf Rollen aufgewickeltem unpolaren Flachbahnmaterial gemäß den Merkmalen des Oberbegriffs des Hauptanspruchs sowie ein Verfahren für den fliegenden Rollenwechsel von auf Rollen aufgewickeltem unpolaren Flachbahnmaterial.

Bei der Verarbeitung von Flachbahnmaterial (Papier, Folien, Vliese oder dergleichen) ist der fliegende Rollenwechsel ein gängiges Verfahren, um eine alte, fast abgespulte Rolle durch eine neue Rolle zu ersetzen, ohne die schnell laufenden Maschinen dafür anhalten zu müssen. Bei derartigen fliegenden Rollenwechseln kommen häufig Haftklebebänder zum Einsatz, um das Ende der alten Bahn mit dem Anfang der neuen Bahn zu verbinden.

Die Durchführung eines fliegenden Rollenwechsels (auch "dynamischer Rollenwechsel" genannt) erfolgt in der folien- und vliesverarbeitenden Industrie bei Materialien mit unpolaren Oberflächen nach zwei unterschiedlichen Verfahren.

Bei dem ersten Verfahren werden doppelseitig klebende Selbstklebebänder in Handarbeit am Bahnanfang der Bahn der neuen Rolle in einer vorteilhaften Anordnung verklebt (üblicherweise gerade, oder w- oder v-förmig) und das an dem Klebeband überstehende Bahnmaterial abgetrennt. Zusätzlich wird der Anfang der Bahn der neuen Rolle mit sogenannten Festhalteetiketten (oder "Fixen") an der darunter liegenden Wicklung der neuen Rolle fixiert, um zu verhindern, dass die Bahn abgewickelt wird, wenn die neue Rolle auf die Umfangsgeschwindigkeit der alten Rolle beschleunigt. Nachteilig an diesem Verfahren ist, dass die Vorbereitung der Rollen sehr zeitaufwändig ist und das Verkleben den Einsatz von Fachkräften erfordert. Zudem führt das Verfahren nicht immer zu den gewünschten Ergebnissen, da die so erzielten Verklebungen durch die Schichtung von Bahnmaterial, Festhalteetiketten und Klebestreifen relativ dick sind. Ferner kann es gerade bei dünnen, flexiblen Bahnmaterialien dazu kommen, dass am Anfang einer neuen Bahn infolge des bei der Rotation auftretenden gegengerichteten Luftstroms Ausstülpungen im Bahnmaterial auftreten, was im allgemeinen zu einer schlechten Verklebung der Bahnen führen kann.

Bei dem zweiten bekannten Verfahren wird ein einseitig klebendes Selbstklebeband überlappend und in gerader Linie unter das freie Ende der obersten Bahn der neuen Rolle verklebt, so dass die klebende Seite nach außen zeigt und nur zum Teil von der neuen Bahn abgedeckt ist. Der freiliegende Teil der nach außen zeigenden klebenden Seite wird mit der Bahn der alten Rolle verklebt. Um bei diesem Verfahren ein Abwickeln der Bahn beim Beschleunigen der neuen Rolle auf die Oberflächengeschwindigkeit der alten Rolle zu verhindern, wird zwischen der obersten Wicklung der neuen Rolle und der darunter liegenden Wicklung eine Flüssigkeit eingebracht, so dass die obere Wicklung an der darunter liegenden Wicklung durch die Kapillarkräfte fixiert wird. Nachteilig hierbei ist, dass auch dieses Verfahren den Einsatz von Fachpersonal erfordert und dennoch nicht immer zu technisch vorteilhaften Ergebnissen führt, da die Effizienz einer Fixierung des Bahnmaterials durch eine Flüssigkeit von vielen Parametern abhängt, beispielsweise der Oberflächenenergie, Flexibilität und dem Flächengewicht des Folienmaterials, von der eingesetzten Flüssigkeitsmenge, deren Polarität, Viskosität, Dichte, sowie der Schichtdicke, Fläche und dem Scherverhalten des Flüssigkeitsfilms. Ein entscheidender Nachteil dieses Verfahrens besteht zudem darin, dass die Bahngeschwindigkeit beim Rollenwechsel nicht zu hoch sein darf und es außerdem zu einer Verunreinigung der Anlage und des Bahnmaterials infolge der verwendeten Flüssigkeit kommt.

Obiges Verfahren kommt auch in der papierverarbeitenden Industrie zum Einsatz. Dort stellt eine Weiterentwicklung des ersten Verfahrens das Spleißverfahren (Splicing-Verfahren) dar, bei dem das zur Fixierung dienende Fix in das die Papierbahnen verbindende Selbstklebeband integriert ausgebildet ist. Nach Verbinden der Bahnen spaltet hierbei der als Fix dienende spaltfähige Träger auf, so dass ein Teil des spaltfähigen Trägers auf dem die Bahnen verbindenden Selbstklebeband verbleibt (d. h. an der oberen Wicklung), während der andere Teil an der darunter liegenden Wicklung verbleibt. Als "spaltfähig" werden solche Träger bezeichnet, die parallel zu ihrer Flächenausdehnung spaltbar sind, und insbesondere solche Träger, die bezogen auf die Anforderungen in einem Spleißverfahren auch tatsächlich spalten.

Zur Durchführung dieses Verfahrens sind in der papierverarbeitenden Industrie etliche Produkte bekannt. So offenbart etwa DE 196 32 689 A2 ein Klebeband, das zusätzlich zu dem Hauptträger mit einem spaltfähigen Papierträger ausgerüstet ist. Bei den dynamischen Belastungen beim Verbinden der Bahnen beider Rollen spaltet der Papierträger auf und deckt mit seinen Resten die zur Fixierung verwendete Klebemasse in einem Bereich nichtklebend ab, der bei anderen Klebebändern ansonsten offen liegen bleibt. DE 199 02 179 A1 offenbart ebenfalls ein derartiges Klebeband, bei dem der spaltfähige Papierträger gegenüber dem Hauptträger versetzt angeordnet ist, um unter Belastung das Auftreten von Reißern zu verhindern.

Die EP A2 1 342 684 beschreibt ein Klebeband für den fliegenden Rollenwechsel von auf Rollen aufgewickeltem Flachbahnmaterial, mit klebender Vorderseite und nichtklebender Rückseite sowie zwei Längskanten, mit einem hauptträger, der einseitig an der Vorderseite mit einer Selbstklebemasse beschichtet ist, wobei ein Teil der nichtklebenden Rückseite mit zumindest einem selbstklebenden System ausgerüstet ist, sowie ein Spliceverfahren für den fliegenden Rollenwechsel von auf Rollen aufgewickelten Flachbahnmaterial.

Zur Verbesserung des fliegenden Rollenwechsels in der folien- und vliesverarbeitenden Industrie wäre es wünschenswert, Klebebänder einsetzen zu können, die ähnlich strukturiert sind wie solche, die bereits aus der papierverarbeitenden Industrie bekannt sind. Insbesondere wird dies angestrebt für Folien- und Vliesmaterialien mit unpolaren Oberflächen. Derartige unpolare Oberflächen treten bei Materialien mit einer geringen Oberflächenenergie auf, beispielsweise bei Polyethylen, bei Polypropylen, bei Polyethylenterephthalat (PET) oder polymerbeschichteten Papieren. Eine Oberflächenenergie ist dann gering, wenn sie 50 mN/m oder weniger beträgt. Für derartige unpolare Oberflächen werden Selbstklebemassen benötigt, die in besonderem Maße hochklebrig und gleichzeitig hochtackig sind. Die hierfür erforderliche hohe Klebkraft und hohe Anfassklebrigkeit (der sogenannte "Tack") lässt sich üblicherweise dadurch erhalten, dass die Fließfähigkeit der Klebemasse erhöht wird.

Herkömmliche hochklebrige und hochtackige Klebemassen sind jedoch für den fliegenden Rollenwechsel bei unpolaren Folien- und Vliesmaterialien bei einem Spleißverfahren schlecht bzw. gar nicht geeignet. Die Erhöhung der Klebkraft und der Anfassklebrigkeit einer Klebemasse geht mit der Erhöhung ihrer Fließfähigkeit einher. Infolge der hohen Fließfähigkeit wird eine derartige Klebemasse aus dem klebend ausgerüsteten spaltfähigen System seitlich ausgedrückt und kann sogar in den spaltfähigen Träger eindringen, was insgesamt zu einem Verblocken des spaltfähigen Systems und zu einem Versagen der Spleiß-Verbindung führen kann. Des weiteren ist nachteilig, dass die fließfähigen Klebemassen während des Spleiß-Vorgangs aus der Klebfuge heraus gelangen und somit nach der Ausführung des Spaltens des spaltfähigen Trägers Klebemassereste unabgedeckt im System verbleiben können.

Die Aufgabe der Erfindung war demzufolge, ein Klebeband mit zumindest einer oberen Selbstklebemasse, einem spaltfähigen Träger und einer unteren Selbstklebemasse an der unteren Seite des spaltfähigen Trägers zur Verfügung zu stellen, das für den fliegenden Rollenwechsel bei hohen Bahngeschwindigkeiten von auf Rollen aufgewickeltem unpolarem Flachbahnmaterial geeignet ist.

Die Aufgabe konnte überraschend gelöst werden durch ein Klebeband, das für den fliegenden Rollenwechsel von auf Rollen aufgewickeltem Flachbahnmaterial mit unpolaren Oberflächen, insbesondere polyolefinischen Untergründen, geeignet ist, und bei dem als obere Selbstklebemasse eine silikonfreie Selbstklebemasse mit einer Klebkraft auf einem Polyethylen-Haftgrund von 1,5 N/cm oder mehr (Meßmethode tesa Test A) und einer Anfassklebrigkeit entsprechend einer Rollweglänge von 50mm oder weniger (Meßmethode tesa Test D), und bei dem als untere Selbstklebemasse eine Selbstklebemasse mit einer Klebkraft auf einem Polyethylen-Haftgrund von 1,5 N/cm oder mehr (Meßmethode tesa Test A) und einer komplexen Viskosität von 10.000 Pa·s oder mehr bei 1 rad/s und 40 °C (Meßmethode tesa Test F) verwendet wird.
Für den fliegenden Rollenwechsel ist es insbesondere von Vorteil, wenn die Anfassklebrigkeit der oberen Selbstklebemasse einer Rollweglänge von 50 mm oder weniger entspricht (Meßmethode tesa Test D).

Die obere Selbstklebemasse ist eine Selbstklebemasse auf Basis eines Gemisches aus mehreren Styrolblockcopolymeren, enthaltend mindestens ein Zweiblockcopolymer mit einem der Blöcke auf Styrolbasis, wobei der Styrolanteil mindestens 25 Gew.-% und/oder der Zweiblockanteil mindestens 40 Gew.-% beträgt, bezogen auf die Blockcopolymer-Gesamtmenge.

Als untere Selbstklebemasse wird eine harzmodifizierte Acrylatmasse oder eine zur oberen Selbstklebemasse identische Selbstklebemasse verwendet.

Die obere Selbstklebemasse dient im Spleißverfahren dazu, die Oberseite des erfindungsgemäßen Klebebands mit dem Bahnanfang der neuen Rolle und mit der fast abgespulten Bahn der alten Rolle zu verbinden, wodurch die Bahnen beider Rollen über das Klebeband untereinander verbunden werden. Die untere Selbstklebemasse dient dazu, die Unterseite des erfindungsgemäßen Klebebands mit der zweitobersten Wicklung zu verbinden, wodurch die oberste und die zweitoberste Wicklung der neuen Rolle über das Klebeband zunächst untereinander verbunden werden. Im weiteren Verlauf des Spleißverfahrens wird beim Spalten des spaltfähigen Trägers die Verbindung der oberen beiden Wicklungen der Rolle wieder getrennt, und zwar derart, dass die von der Oberseite der jeweiligen Wicklung abgekehrten klebenden Bereiche der oberen Selbstklebemasse und der unteren Selbstklebemasse von dem nunmehr gespaltenen Träger nichtklebend abgedeckt bleiben.

Für die Erfindung von wesentlicher Bedeutung ist hierbei die konkrete Ausgestaltung der oberen Selbstklebemasse und der unteren Selbstklebemasse im Hinblick auf deren Klebkraft, Anfassklebrigkeit und Viskosität. Die erfindungsgemäße Wahl der komplexen Viskosität der unteren Selbstklebemasse hat zur Folge, dass ein kalter Fluss der unteren Selbstklebemasse verhindert wird. Hierdurch kann die Selbstklebemasse an der unteren Seite des spaltfähigen Trägers nicht aus der Klebefuge austreten und mit der oberen Seite des spaltfähigen Trägers verkleben, wodurch ein Verblocken des Trägers vermieden wird und das System auch weiterhin spaltfähig bleibt.

Für die obere Selbstklebemasse ist es insbesondere von Vorteil, eine solche Masse zu wählen, die den Ansprüchen für einen Folienspleißprozess genügt. Sie hat vorteilhaft eine hinreichende Anfassklebrigkeit (Tack), um bei dem Spleißprozess auf unpolaren Materialien, insbesondere polyolefinischen Untergründen gut anzufassen, sollte im Prozess nicht von derartigen Untergründen abscheren, besitzt also bevorzugt eine gute Scherfestigkeit darauf, und entwickelt auf dem polyolefinischen Material hinreichend gute Klebkräfte.

Die Bestimmung der Klebkraft wurde hierbei wie folgt durchgeführt (tesa Test A): Als definierter Haftgrund (Klebkraftplatte) wurde eine Polyethylen-Platte eingesetzt, die als Prüfplatte im Spritzgussverfahren aus HDPE-Granulat Hostalen GC7260 Firma Basell hergestellt worden war. Vor einer Messung wurde diese Platte mit Ethanol gereinigt. Als zu untersuchende Probe wurde ein Standardpolyesterträger mit einer Stärke von 23 µm mit der jeweiligen Selbstklebemasse einseitig beschichtet (Selbstklebemassenauftrag: 50 g/m²). Ein 20 mm breiter Streifen des beschichteten Standardpolyesterträgers wurde unter Belastung (2 kg) auf den Haftgrund aufgedrückt. Unmittelbar im Anschluss daran wurde das Klebeband in einem Winkel von 180 ° vom Substrat mit einer Geschwindigkeit von 300 mm/min abgezogen und die hierfür bei Raumtemperatur benötigte Kraft gemessen. Der Messwert (in N/cm) ergab sich als Mittelwert aus drei Einzelmessungen. Zur Kalibrierung des Messverfahrens "tesa Test A" wurde ein kommerzielles Testklebeband zur Prüfung von nichtklebenden Beschichtungen (Typ "tesa 7475" der tesa AG; Klebkraft auf Stahl laut Spezifikation: 31,25 N/25 mm) entsprechend diesem Messverfahren untersucht; die hierbei ermittelte Klebkraft auf der Polyethylen-Prüfplatte betrug 4,5 N/cm.
Teilweise wurden vergleichende Untersuchungen auf Stahl statt auf Polyethylen mit den sonst identischen Versuchsparametern durchgeführt (Test A2).

Die Bestimmung der Anfassklebrigkeit wurde wie folgt durchgeführt (tesa Test D): Als Maß für die Anfassklebrigkeit bei sehr kurzer Kontaktzeit wurde der sogenannte Rolling-Ball-Tack gemessen. Als zu untersuchende Probe wurde ein Standardpolyesterträger mit einer Stärke von 23 µm der jeweiligen Selbstklebemasse einseitig beschichtet (Selbstklebemassenauftrag: 50 g/m²). Ein etwa 10 cm langer Streifen des Klebebandes wurde mit der klebenden Seite nach oben horizontal auf der Prüfebene befestigt. Eine Probenkugel aus Stahl (Durchmesser: 11 mm; Masse: 5,6 g) wurde mit Aceton gereinigt und für 2 h im Raumklima (Temperatur: 23 °C +/- 1 °C; relative Luftfeuchtigkeit: 50 % +/-1 %) konditioniert. Zur Messung wurde die Stahlkugel durch Herabrollen von einer 65 mm hohen Rampe (Neigungswinkel: 21 °) im Schwerefeld der Erde beschleunigt. Von der Rampe wurde die Stahlkugel unmittelbar auf die klebende Oberfläche der Probe gelenkt. Der auf der Klebemasse bis zum Stillstand der Kugel zurückgelegte Weg wurde gemessen. Die so ermittelte Rollweglänge dient hierbei als inverses Maß für die Anfassklebrigkeit der Selbstklebemasse (d.h. je kürzer der Rollweg ist, desto höher ist die Anfassklebrigkeit und umgekehrt). Der jeweilige Messwert ergab sich (als Längenangabe in mm) aus dem Mittelwert von fünf Einzelmessungen.

Die Bestimmung der komplexen Viskosität wurde hierbei wie folgt durchgeführt (tesa Test F): Die jeweilige erhaltene Haftklebemasse wurde als zylindrisch-runder Probenkörper mit einem Durchmesser von 25 mm und einer Höhe von 0,8 mm in einem deformationsgesteuerten Rheometer (Typ RDA III, Rheometrics Scientific; Platte-Platte-Geometrie; Messkopf: 2000 g Bendix) untersucht (vorbelastet mit einer Axialkraft von 3 N). Die dynamische Messung erfolgte bei 40 °C im Raumklima (Normalbedingungen) und einer 3 %igen Deformation des Probenkörpers im Frequenzbereich von 0,1 bis 500 rad/s als komplexe Viskosität η*. Der als "komplexe Viskosität" angegebene Zahlenwert [in Pa·s] ist dabei der Betrag der im niederfrequenten Bereich (1 rad/s) und bei 40 °C gemessenen komplexen Viskosität.

Vorteilhaft ist es für das erfindungsgemäße Klebeband, wenn als obere Selbstklebemasse und/oder als untere Selbstklebemasse eine Selbstklebemasse eingesetzt wird, die eine Klebkraft auf einem Polyethylen-Haftgrund von 3,0 N/cm oder mehr (Meßmethode tesa Test A) aufweist, wobei es besonders vorteilhaft ist, wenn die Klebkraft auf einem Polyethylen-Haftgrund 5,0 N/cm oder mehr beträgt. Hierdurch wird ein besonders effizientes Haften des Klebebands an dem zu verbindenden unpolaren Flachbahnmaterial erzielt, was die Beständigkeit der Verbindung und somit die Effizienz des Spleißverfahrens insgesamt noch weiter verbessert.

Weiterhin ist es vorteilhaft, wenn als obere Selbstklebemasse eine Selbstklebemasse verwendet wird, die eine Anfassklebrigkeit entsprechend einer Rollweglänge von 40 mm oder weniger (Meßmethode tesa Test D) aufweist, wobei es besonders vorteilhaft ist, wenn diese als Maß für die Anfassklebrigkeit verwendete Rollweglänge 20 mm oder weniger beträgt. Hierdurch wird ein besonders hoher Wirkungsgrad beim Verbinden der Bahnen durch Zusammenführen beider sich drehender Rollen erzielt.

Als obere Selbstklebemassen werden solche auf Basis von Styrolblockcopolymeren eingesetzt. Hier sind Copolymere erfindungsgemäß besonders geeignet, die aus Polymerblöcken gebildet aus einem Vinylaromaten - insbesondere vorteilhaft aus Styrol - (A-Blöcke), und aus Polymerblöcken gebildet durch Polymerisation von 1,3-Dienen (B-Blöcke), wie zum Beispiel Butadien oder Isopren oder einem Copolymer, bestehen. Das genannte Copolymer kann beispielsweise ein solches aus den vorgenannten Verbindungen Butadien und Isopren sein.
Dabei kommen Mischungen unterschiedlicher Styroblockcopolymere zum Einsatz. Auch Produkte, die zum Teil oder vollständig hydriert sind, können eingesetzt werden.

Vorteilhaft einsetzbar für Blockcopolymer-Mischungen sind als eine Komponente Blockcopolymere, die eine lineare A-B-A-Struktur aufweisen. Weiter vorteilhaft einsetzbar sind lineare Multiblockcopolymere. Insbesondere vorteilhaft einsetzbar sind Blockcopolymere von radialer Gestalt sowie sternförmige Multiblockcopolymere.

Als weitere Komponente werden bevorzugt A-B-Zweiblockcopolymere eingesetzt, insbesondere solche, die auf die oben genannten A- und B-Block-Monomere basieren.

Erfindungsgemäß wird als obere Selbstklebemasse (1, 11) eine Selbstklebemasse auf Basis eines Gemisches aus mehreren Styrolblockcopolymeren eingesetzt, bei dem mindestens eines der Copolymere ein Zweiblockcopolymer mit einem der Blöcke auf Styrolbasis ist, wobei der Styrolanteil mindestens 25 Gew.-% und/oder der Zweiblockanteil mindestens 40 Gew.-% beträgt, bezogen auf die Blockcopolymer-Gesamtmenge.

Gut erfindungsgemäß als obere Selbstklebemasse einsetzbar sind beispielsweise Zweiblock-enthaltende (SIS)-Styrol-Isopren-Styrol-Copolymere mit den vorstehend genannten Styrol- und/oder Zweiblock-Anteilen, wie sie beispielsweise unter dem Handelsnamen Europrene® SOL T-192 von der Firma EniChem (Styrolanteil 25% Gew.-%; Zweiblockantel 23 Gew.-%) kommerziell erhältlich sind.

Als besonders günstig als obere Haftklebemasse haben sich solche Klebmassen herausgestellt, die zumindest eine Blockcopolymermischung aufweisen, bei der der Styrolanteil mindestens 25 Gew.-%, bevorzugt 30 Gew.-%, beträgt, und die einen Zweiblockanteil von mindestens 40 Gew.-%, bevorzugt mindestens 60 Gew.-%, besitzen. Hierdurch lassen sich insbesondere gute Scherfestigkeitswerte realisieren.

Hervorragend erfindungsgemäß als obere Selbstklebemasse eingesetzt werden können hier Zweiblock-enthaltende (SB)ₙ-Styrol-Butadien-Multiarm-Copolymere mit den vorstehend genannten Styrol- und Zweiblock-Anteilen, wie sie beispielsweise unter dem Handelsnamen Kraton® D1118 (Styrolanteil 33 ± 2 Gew.-%; Zweiblockanteil ca. 78 Gew-% It. Spezifikation) kommerziell erhältlich sind.

Es ist vorteilhaft, wenn die Einsatzkonzentrationen für das Blockcopolymer bzw. die Blockcopolymer-Mischung in einer Konzentration im Bereich zwischen 30 Gew.-% und 70 Gew.-%, insbesondere im Bereich zwischen 35 Gew.-% und 55 Gew.-%, bezogen auf die Haftklebemasse, liegen.

Als Klebrigmacher dienen insbesondere Klebharze, die mit dem Elastomerblock der Styrolblockcopolymere verträglich sind. Geeignete Klebharze sind unter anderem vorzugsweise nicht hydrierte oder partiell oder vollständig hydrierte Harze auf Basis von Kolophonium oder Kolophoniumderivaten, hydrierte Polymerisate des Dicyclopentadiens, nicht hydrierte, partiell, selektiv oder vollständig hydrierte Kohlenwasserstoffharze auf Basis von C-5, C-5/C-9 oder C-9 Monomerströmen, oder besonders bevorzugt Polyterpenharze auf Basis von α-Pinen und/oder ß-Pinen und/oder ö-Limonen. Vorgenannte Klebharze können sowohl allein als auch im Gemisch eingesetzt werden. Zudem besitzt die Klebmasseformulierung besonders bevorzugt mindestens ein Klebharz, das bei Raumtemperatur flüssig ist.

Als weitere Additive können vorteilhaft allein oder in Kombination genutzt werden:
- primäre Antioxidanzien, wie zum Beispiel sterisch gehinderte Phenole,
- sekundäre Antioxidanzien, wie zum Beispiel Phosphite oder Thioether,
- Prozessstabilisatoren, wie zum Beispiel C-Radikalfänger,
- Lichtschutzmittel, wie zum Beispiel UV-Absorber oder sterisch gehinderte Amine,
- Verarbeitungshilfsmittel,
- Endblockverstärkerharze.

Weiterhin ist es vorteilhaft, wenn die eingesetzten Klebharze einen hohen Anteil an Flüssigharzen enthalten, insbesondere einen Anteil von mindestens 25 Gew.-%, bevorzugt mindestens 35% Gew.-%, bezogen auf die Gesamtmenge der eingesetzten Harze.

Eine derartige Zusammensetzung weist eine besonders günstige Klebkraft und Anfassklebrigkeit auf. Ganz besonders vorteilhaft ist es, wenn die obere Selbstklebemasse eine komplexe Viskosität von 15.000 Pa·s oder mehr aufweist.

Üblicherweise wird der Masseauftrag der oberen Selbstklebemasse in einem Bereich von 30 bis 100 g/m² gewählt, insbesondere in einem Bereich von 35 bis 70 g/m².

Als spaltfähiger Träger kommen alle spaltfähigen flächigen Trägermaterialien in Frage, insbesondere leicht spaltende Papiere, Papierverbundsysteme (beispielsweise Duplexpapiere und geleimte Papiersysteme), Folienverbundsysteme (beispielsweise geleimte Foliensysteme), polymere Verbundsysteme (beispielsweise coextrudierte polymere Verbundsysteme) und polymere Vliesstoffe. Üblicherweise kommt ein Träger zum Einsatz, bei dem die Spaltkraft insgesamt 5 bis 70 cN/cm beträgt, insbesondere 12 bis 60 cN/cm.

Erforderlich ist es, dass die obere Selbstklebemasse und die untere Selbstklebemasse eine hohe Klebkraft aufweisen. Insbesondere muss die Klebkraft dieser Selbstklebemassen auf den jeweiligen Oberflächen (Träger und zu verklebendes Bahnmaterial) größer ausfallen als die für ein Spalten des spaltfähigen Trägers erforderliche Kraft. Als untere Selbstklebemasse kommt insbesondere eine harzmodifizierte Acrylatmasse in Frage. Derartige harzmodifizierte bzw. harzabgemischte Massen umfassen ein Klebharz und eine Acrylatklebemasse (teilvernetzt). Als Klebharz können die üblichen Klebharze verwendet werden, beispielsweise Terpenphenolharze und Kolophoniumharze. Als Acrylatklebemasse werden Copolymere auf Acrylatbasis mit geeigneter Glastemperatur verwendet, insbesondere Copolymere auf der Basis von Bestandteilen, die das Copolymer insgesamt weicher machen (beispielsweise niedermolekulare Acrylate des Typs C₄ bis C₁₂ wie 2-Ethylhexylacrylat oder n-Butylacrylat), und die ebenfalls Bestandteile enthalten, die das Copolymer insgesamt härter machen (beispielsweise Acrylsäure oder funktionalisierte Bestandteile wie Glycidylmethacrylat oder Hydroxyethylmethacrylat). Zur Modifizierung der Acrylatklebemasse mit dem Klebharz werden beide Massen gemischt. Eine Vernetzung wird anschließend nach üblichen Vernetzungsverfahren durchgeführt, etwa als Vernetzungsreaktion bei hohen Temperaturen oder durch Verwendung eines geeigneten Katalysators, beispielsweise von Lewis-Säuren wie Zinkchlorid.

Vorteilhaft ist es ferner, wenn als untere Selbstklebemasse eine Selbstklebemasse mit einer komplexen Viskosität von 12.000 Pa·s oder mehr (Meßmethode tesa Test F) verwendet wird, insbesondere wenn von 15.000 Pa·s oder mehr. Diese Ausgestaltungen vermag in besonders effizienter Weise ein Verblocken des spaltfähigen Systems und somit ein Versagen des Spleiß-Verbindung zu verhindern.

Gleichfalls ist es vorteilhaft, wenn als untere Selbstklebemasse eine harzmodifizierte Acrylatklebemasse verwendet wird, wobei es insbesondere vorteilhaft ist, wenn diese 70 bis 80 Gew.-% Acrylatklebemasse und 20 bis 30 Gew.-% Klebharz umfasst. Im besonderen Maße ist es hierbei vorteilhaft, als Klebharz ein Terpenphenolharz und/oder als Acrylatklebemasse ein Copolymer aus 48,5 Gew.-% n-Butylacrylat, 48,5 Gew.-% 2-Ethylhexylacrylat, 2 Gew.-% Glycidylmethacrylat und 1 Gew.-% Acrylsäure zu verwenden. Derartige Zusammensetzungen weisen eine hohe Klebkraft an unpolaren Flächen und Vliesen auf und stellen gleichzeitig die Spaltfähigkeit des spaltfähigen Trägers sicher, insofern sie auf Grund ihrer geringeren Fließfähigkeit weder in den spaltfähigen Träger eindringen noch aus der Klebfuge herausgedrückt werden.

Grundsätzlich können die obere Selbstklebemasse und die untere Selbstklebemasse auch identisch gewählt werden nämlich als silikonfreie Selbstklebemasse, wie vorstehend beschrieben auf Basis von Blockcopolymeren.

Die Aufbauten der erfindungsgemäßen Klebebänder können in unterschiedlichen Ausführungen realisiert werden. Insbesondere sei verwiesen auf die folgenden Schriften, deren Offenbarung vollumfänglich in den Offenbarungsgehalt dieser Schrift einbezogen wird:
- DE 196 32 689 A2 (Beiersdorf), insbesondere Aufbau gemäß Fig. 1 und die in Spalte 3, Zeile 31 bis 44 erläuternden Sachverhalte, wobei die dortige oben angeordnete Klebemasse (3; zwischen dem Träger 2 und der Abdeckung 4) durch die hiesige obere Klebemasse (1, 11) und/oder die dortige untere Klebemasse (ebenfalls mit 3 bezeichnet) durch die hiesige untere Klebemasse (3, 13) substituiert sind,
- DE 199 02 179 A1 (Beiersdorf), insbesondere Aufbau gemäß Fig. 1 und die in Spalte 3, Zeile 31 bis 44 erläuternden Sachverhalte, wobei die dortige Klebemasse N1 durch die hiesige obere Klebemasse (1, 11) und/oder die dortige Klebemasse N3 durch die hiesige untere Klebemasse (3, 13) substituiert sind, und wobei auch die dortige Klebemasse N2 durch eine der hiesigen Klebemassen (1, 11, 3, 13) substituiert sein kann,
- WO 91/08159 A1 (Norrman), insbesondere Aufbau gemäß Fig. 1 und die auf Seite 2, Zeile 35 bis Seite 4, Zeile 14 erläuternden Sachverhalte, wobei die dortige Klebemasse 3 durch die hiesige obere Klebemasse (1, 11) und/oder die dortige Klebemasse 4 durch die hiesige untere Klebemasse (3, 13) substituiert sind,
- DE 198 41 609 A1 (Prinz), insbesondere Aufbauten gemäß Fig. 1 und die in den Spalte 3, Zeile 7 bis Zeile 37 erläuternden Sachverhalte, wobei die dortige Klebemasse 34 durch die hiesige obere Klebemasse (1, 11) und/oder die dortige Klebemasse 32 durch die hiesige untere Klebemasse (3, 13) substituiert sind,
- US 2004/0075014 A1 (Jacobs et al.), insbesondere Aufbauten gemäß Fig. 1 und die in den Abschnitten [0049] bis [0054] erläuternden Sachverhalte, wobei die dortige Klebemasse 3 durch die hiesige obere Klebemasse (1, 11) und/oder die dortige Klebemasse 2 durch die hiesige untere Klebemasse (3, 13) substituiert sind,
- US 2005/0126688 A1 (Bean et al), insbesondere Aufbauten gemäß der Fig. 2a, 2b, 2c und 2d und die in den Abschnitten [0024] bis [0037] erläuternden Sachverhalte, wobei die dortigen Klebemassen 20 bzw. 20a durch die hiesige obere Klebemasse (1, 11) und/oder die dortige Klebemasse 30a und 30b bzw. 30c durch die hiesige untere Klebemasse (3, 13) substituiert sind,
- US 6,432,241 B1 (Congard et al.), insbesondere Aufbauten gemäß der Fig. 1 und 2, und die in Spalte 3, Zeilen 52 bis 64 und Spalte 4, Zeile 34 bis Spalte 6, Zeile 53 erläuternden Sachverhalte, wobei die dortigen Klebemassen 12 durch die hiesige obere Klebemasse (1, 11) und/oder die dortige Klebemasse 15 durch die hiesige untere Klebemasse (3, 13) substituiert sind,
- US 2002/0056784 A1 (Davies et al.), insbesondere Aufbau gemäß Fig. 2, und die in den Abschnitten [0038] bis [0052] erläuternden Sachverhalte, wobei die dortigen Klebemassen 16 durch die hiesige obere Klebemasse (1, 11) und/oder die dortige Klebemasse 24 durch die hiesige untere Klebemasse (3, 13) substituiert sind,
ohne sich durch den Bezug auf die vorgenannten Ausführungsformen in der Erfindung aber unnötig beschränken zu wollen.

Es ist insbesondere von Vorteil, wenn das Klebeband einen nichtspaltfähigen Träger umfasst, dessen obere Seite mit der oberen Selbstklebemasse beschichtet ist und dessen untere Seite vollständig oder zumindest teilweise mit der oberen Seite des spaltfähigen Trägers verbunden ist. Durch Verwenden eines nichtspaltfähigen Trägers, der die Bahn der alten Rolle mit dem Bahnanfang der neuen Rolle vor und auch nach Spalten des spaltfähigen Trägers verbindet, wird eine besonders belastbare Verbindung beider Bahnen erzielt und die Effizienz des Spleißverfahrens weiterhin gesteigert. Insbesondere vorteilhaft ist dabei, wenn die untere Seite des nichtspaltfähigen Trägers (ganz oder teilweise) mit der oberen Seite des spaltfähigen Trägers über eine verbindende Selbstklebemasse verbunden ist (fünflagiger Aufbau). Diese Verbindung kann grundsätzlich beliebig herbeigeführt werden, beispielsweise mit einer Selbstklebemasse, einer aushärtenden Schmelzklebemasse und dergleichen.

Durch Verwendung eines mechanisch stabilen nichtspaltfähigen Trägers wird beim Spleißverfahren die Effizienz der Verklebung der Bahn der alten Rolle mit dem Bahnanfang der neuen Rolle stark erhöht. Als Hauptträger können alle typischen flächenförmige Trägermaterialien für Klebebänder eingesetzt werden, beispielsweise Papierträger aus ein- oder zweiseitig gestrichenem glatten Rohpapier sowie Folienträger, etwa BOPP-Folien, PET-Folien, aluminisierte PET-Folien und Aluminiumfolien. Wünschenswert ist hierbei, dass es sich um einen reißfesten Hauptträger handelt. Als verbindende Selbstklebemasse kann eine beliebige typische Selbstklebemasse eingesetzt werden. Günstig ist es jedoch, wenn die verbindende Selbstklebemasse und die untere Selbstklebemasse identisch gewählt werden, etwa als harzmodifizierte Acrylatmasse, da in diesem Fall die Gefahr einer Verblockung des spaltfähigen Systems besonders gering ist.

Das Klebeband weist demnach über die gesamte Länge der Verklebung und damit auch über die gesamte Länge des Klebebandes einen spaltfähigen Träger auf. Der spaltfähige Träger kann sich über die gesamte Breite des nichtspaltfähigen Trägers erstrecken. Günstig ist es jedoch, wenn die Breite des spaltfähigen Trägers kleiner ist als die Gesamtbreite des Klebebandes, so dass nur in einem kleinen Teil seiner Breite eine Fixierung mit der darunter liegenden Bahn erzielt wird. Besonders günstig ist es hierbei, wenn der spaltfähige Träger mit dem nichtspaltfähigen Träger nicht bündig abschließt, sondern gegenüber diesem eingerückt an dessen unteren Seite befestigt ist. Hierdurch wird beim Spleißverfahren die Gefahr eines Auftretens von Reißern noch weiter vermindert.

Die Erfindung umfasst weiter die Verwendung des erfindungsgemäßen Klebebands zum Verkleben von auf Rollen aufgewickeltem Flachbahnmaterial mit unpolaren Oberflächen im Verlauf eines fliegenden Rollenwechsels, insbesondere von Folien und/oder Vliesen. Durch Einsatz des Klebebands wird die Effizienz des Spleißverfahrens insgesamt signifikant gesteigert.

Schließlich bietet die Erfindung ein Spleißverfahren für den fliegenden Rollenwechsel von auf Rollen aufgewickeltem unpolaren Flachbahnmaterial, insbesondere Folien und/oder Vliese, wobei dem Ende der obersten Bahn einer neuen Rolle eines unpolaren Flachbahnmaterials das erfindungsgemäße Klebeband (zumindest teilweise) hinterklebt wird, während die untere Seite des Klebebandes mit der darunter liegenden Bahn der neuen Rolle verklebt wird und diese hierdurch sichert, worauf die so ausgerüstete neue Rolle neben einer fast gänzlich abgespulten, zu ersetzenden Rolle platziert und auf die gleiche Oberflächengeschwindigkeit beschleunigt wird, die neue Rolle dann gegen die oberste Bahn der alten Rolle gedrückt wird, wobei die offen liegende Selbstklebemasse des Klebebandes mit der alten Bahn bei im wesentlichen gleichen Geschwindigkeiten der Bahnen verklebt werden, während zugleich das spaltfähige System spaltet und die Selbstklebemassen des spaltfähigen Systems mit den beiden gespalteten Resten des spaltfähigen Trägers nicht klebend abdeckt.

Im folgenden soll die Erfindung unter Bezugnahme auf die Abbildungen näher beschrieben werden. Es zeigen hierbei
Fig. 1 eine schematische seitliche Darstellung einer Ausbildung des erfindungsgemäßen Klebebandes (dreilagiger Aufbau, quer zur Längsrichtung des Klebebandes dargestellt), und
Fig. 2 eine schematische seitliche Darstellung einer weiteren Ausbildung des erfindungsgemäßen Klebebandes (fünflagiger Aufbau, quer zur Längsrichtung des Klebebandes dargestellt).

In Fig. 1 ist ein erfindungsgemäßes Klebeband dargestellt, das für den fliegenden Rollenwechsel von auf Rollen aufgewickeltem Flachbahnmaterial mit unpolaren Oberflächen geeignet ist. Das Klebeband ist als dreilagiger Aufbau aus dem spaltfähigen Träger 2 ausgebildet, der an seiner oberen Seite mit der oberen Selbstklebemasse 1 und an seiner unteren Seite mit der unteren Selbstklebeschicht 3 beschichtet ist. Ein derartiger Aufbau ist dann einsetzbar, wenn der spaltfähige Träger 2 entlang seiner Flächenausdehnung eine hinreichende mechanische Belastbarkeit aufweist, um den Belastungen, die beim Verbinden der Bahn der fast abgespulten Rolle mit dem Bahnanfang der neuen Rolle auftreten, standhalten zu können.

Das Klebeband umfasst zusätzlich ein Trennsystem 6 zur nichtklebenden Abdeckung der oberen Selbstklebemasse 1, so dass die klebende obere Seite des Klebebandes bei Lagerung geschützt ist. Als Trennsystem können alle herkömmlichen Trennpapiere verwendet werden, etwa silikonisierte Trennpapiere oder silikonisierte Trennfolien. Das Trennsystem kann hierbei einteilig oder mehrteilig (nicht in Fig. 1 dargestellt) ausgeführt sein.

In Fig. 2 ist eine weitere besonders günstige Ausbildung des erfindungsgemäßen Klebebandes als fünflagiger Aufbau dargestellt. Diese Ausbildung des Klebebandsystems umfasst einen spaltfähigen Träger 12 und einen nichtspaltfähigen Träger 14, die miteinander verbunden sind. Die Verbindung ist hier als separate, verbindende Selbstklebemasse 15 ausgeführt, die die obere Seite des spaltfähigen Trägers 12 mit einem Teil der unteren Seite des nichtspaltfähigen Trägers 14 verbindet. Somit ist der nichtspaltfähige Träger 14 an seiner oberen Seite mit der oberen Selbstklebemasse 11 beschichtet und an einem Teil seiner unteren Seite mit der verbindenden Selbstklebemasse 15, die den spaltfähigen Träger 12 am nichtspaltfähigen Träger 14 verankert. Der spaltfähigen Träger 12 ist hierbei gegenüber dem nichtspaltfähigen Träger 14 eingerückt bzw. versetzt angeordnet.

Die in Fig. 2 dargestellte Ausbildung weist ferner zusätzlich ein Trennsystem 16 zur nichtklebenden Abdeckung der oberen Selbstklebemasse 11 auf, wofür alle herkömmlichen Trennpapiere verwendet werden können, etwa silikonisierte Trennpapiere oder silikonisierte Trennfolien. Besonders vorteilhaft das hier dargestellte zweiteilige Trennsystem 16a/16b, das in Längsrichtung in ein hinteres Abdeckungsteil 16a und ein vorderes Abdeckungsteil 16b unterteilt ist, etwa mittels einer Perforation oder einem Schlitz. Dies hat den Vorteil, dass das Klebeband zunächst mit dem Bahnanfang der neuen Rolle verklebt werden kann, wozu lediglich der klebende Bereich des Klebebands unter dem hinteren Abdeckungsteil 16a freigelegt wird und der klebende Bereich zur Verklebung mit der Bahn der alten Rolle durch das vordere Abdeckungsteil 16b weiterhin abgedeckt und somit geschützt bleibt.

Zur Verdeutlichung der zweiten Ausbildung des erfindungsgemäßen Klebebands ist im Folgenden eine konkrete Ausgestaltung beispielhaft angeführt:

### Beispiel 1:

Ein erfindungsgemäßes Klebeband mit einer Breite von 50 mm wurde aus einem maschinenglatten Rohpapier mit einem Flächengewicht von 54 g/cm² und einer Stärke von 66 µm als nichtspaltfähigem Träger 14 hergestellt. Die obere Seite des nichtspaltfähigen Trägers 14 ist mit einer oberen Selbstklebemasse 11 beschichtet.

Als obere Selbstklebemasse 11 wurde ein Synthesekautschuk auf Styrol-Blockcopolymerbasis mit folgender Zusammensetzung verwendet: 48 Gew.-% eines Styrol-Butadien-Styrol-Blockcopolymers (Typ "Kraton D1118" der Firma Kraton), 24 Gew.-% eines Alphapinenharzes (Typ "Dercolyte A 115" der Firma DRT, Erweichungspunkt 115 °C), 27 Gew.-% eines flüssigen Kohlenwasserstoffharzes (Typ "Wingtack 10" der Firma Goodyear - flüssiges synthetisches aliphatisches C-5 Polyterpen/Kohlenwasserstoffharz; Erweichungspunkt 10 °C), 0,5 Gew.-% eines primären Antioxidans (Typ "Irganox 1010" der Firma Ciba) und 0,5 Gew.-% eines sekundären Antioxidans (Typ "Weston 339" der Firma Interorgana).

Das Klebeband umfasst zudem den spaltfähigen Träger 12 sowie eine untere Selbstklebemasse 13 und eine verbindende Selbstklebemasse 15. Als spaltfähiger Träger 12 wurde ein Papier mit einem Flächengewicht von 51 g/cm² und einer Stärke von 90 µm eingesetzt. Die Breite des spaltfähigen Trägers 12 betrug 12 mm.

Ferner weist das Klebeband ein zweiteilig ausgeführtes Trennsystem 16 zur nichtklebenden Abdeckung der oberen Selbstklebemasse 11 auf, damit die klebende obere Seite bei Lagerung des erfindungsgemäßen Klebebandes geschützt ist. Das vorliegende Trennsystem 16 wurde aus silikonisiertem Trennpapier hergestellt und umfasst ein hinteres Abdeckungsteil 16a, das den Teil des Klebebandes abdeckt, der mit der obersten Lage der Bahn der neuen Rolle verbunden wird, und ein vorderes Abdeckungsteil 16b, das den Teil des Klebebandes abdeckt, der mit der Bahn der alten Rolle verbunden wird. Beide Abdeckungsteile sind durch einen Schlitz voneinander getrennt, der entlang der Längsrichtung des Klebebandes verläuft.

Als untere Selbstklebemasse 13 und verbindende Selbstklebemasse 15 wurden identische Selbstklebemassen mit folgender Zusammensetzung verwendet: 75 Gew.-% eines Polymers auf Acrylatbasis (als Acrylatklebemasse) und 25 Gew.-% eines Terpenphenolharzes (als Klebharz).

Als Terpenphenolharz wurde das Produkt "DT110" der Firma DRT eingesetzt. Als Polymer auf Acrylatbasis wurde ein Copolymer aus 48,5 Gew.-% n-Butylacrylat, 48,5 Gew.-% 2-Ethylhexylacrylat, 2 Gew.-% Glycidylmethacrylat und 1 Gew.-% Acrylsäure eingesetzt. Dies Polymer wies eine massenmittlere Molmasse von 950.000 g/Mol und eine Polydispersität von D = 8,7 auf (ermittelt aus den Ergebnissen einer Gelpermeationschromatographie an 100 µl klarfiltrierter Probe (enthaltend 150 µg in Tetrahydrofuran gelöstes Copolymer) unter Verwendung von Tetrahydrofuran als Eluent (0,5 ml/min), einer Vorsäule (Typ PSS SDV 10 µm, ID 8*50mm) und einer Trennsäule (Typ PSS SDV 10 µm linear one, ID 8*300mm) der Firma Polymer Standards Service und einem Differentialrefraktometer (Shodex, RI71) zur Detektion; Kalibrierung mit engverteiltem Polystyrol-Standard (PSS Ready Cals; Polymer Standards Service); Umrechnung der Polystyrol-Kalibrierung in eine Polymethylmethacrylat-Kalibrierung unter Verwendung der Mark-Houwink-Koeffizienten für Polystyrol (K = 0,0136; a = 0,7140) und Polymethylmethacrylat (K = 0,0126; a = 0,6880)). Zur Vernetzung wurden der Mischung als Lewis-Säure 0,3 Gew.-% Zinkchlorid zugesetzt, bezogen auf die Trockenmasse des Copolymers, und 15 min bei 120 °C getrocknet.

Zunächst wurden die klebtechnischen Eigenschaften der oberen Selbstklebemasse 11 und der unteren Selbstklebemasse 13 bzw. der verbindenden Selbstklebemasse 15 untersucht, indem die Klebkraft der Selbstklebemassen auf einem Polyethylen-Haftgrund (Meßmethode tesa Test A), deren Anfassklebrigkeit anhand des Rolling-Ball-Tacks (Meßmethode tesa Test D) sowie die komplexen Viskositäten der Selbstklebemasse (Meßmethode tesa Test F) bestimmt wurden.

Weiterhin wurden die klebtechnischen Eigenschaften des mit den Selbstklebemassen 11, 13 und 15 hergestellten Klebebands untersucht. Dazu wurde zum einen die Scherfestigkeit des Klebebandes auf einer Polyethylen-Unterlage als Scherstandzeit bestimmt (tesa Test B). Hierfür wurde ein Streifen des Klebebandes mit einer Breite von 13 mm und einer Länge von 20 mm auf eine zuvor mit Ethanol gereinigten Polyethylen-Prüfplatte aufgebracht und mit konstantem Anpressdruck viermal auf den Träger aufgedrückt. Das Klebeband wurde bei Raumtemperatur mit 1 kg belastet und die Scherstandzeit (in Minuten) als Mittelwert aus drei Messungen ermittelt.

Ferner wurde das relative Spaltverhalten eines beidseitig mit den jeweiligen Selbstklebemassen beschichteten spaltfähigen Trägers untersucht (tesa Test C). Als Vergleichswert wurde hierfür das Spaltverhalten eines spaltfähigen Trägers verwendet, der nicht mit Selbstklebemassen beschichtet war. Für eine Messung wurden 12 cm lange Streifen des beschichteten und nichtbeschichteten Trägers zunächst 24 h lang bei 40 °C unter Belastung (2 kg/cm²) gelagert. Zur Messung wurden die Träger auf eine Länge von 2 cm vorgespalten und die zum Weiterspalten der Träger bei einer Spaltgeschwindigkeit von 300 mm/min jeweils benötigte Kraft gemessen. Der Test galt als bestanden, wenn der Unterschied in der zum Weiterspalten benötigten Kraft beim beschichteten und beim nichtbeschichteten Träger weniger als 20 % betrug.

Die Ergebnisse der Untersuchungen sind für die obere Selbstklebemasse 11 einerseits und die untere Selbstklebemasse 13/verbindende Selbstklebemasse 15 andererseits in Tabelle 1 mit Bezug auf das jeweilige Testverfahren (tesa Test) wiedergegeben.

**Tabelle 1:**

| Selbstklebemasse (Bezugsziffer) | Klebkraft [N/cm] (Test A) | Scherstandzeit [min] (Test B) | relative Spaltverhalten (Test C) | Rollweglänge [mm] (Test D) | komplexe Viskosität [das] (Test F) |
|---|---|---|---|---|---|
| obere (11) | 8,2 | > 10.000 | -- | 4 | 25.000 |
| untere (13) | | | | | |
| verbindende (15) | 2,0 | > 10.000 | bestanden | 40 | 16.000 |

Es wurden einige weitere erfindungsgemäße Klebebänder analog zu Beispiel 1 hergestellt und vermessen, bei denen die obere Masse auf die folgenden Zusammensetzungen basiert (Gesamtzusammensetzung der Klebmasse: 99% Basisklebmasse, 0,5 Gew.-% primäres Antioxidans (Typ "Irganox 1010" der Firma Ciba) und 0,5 Gew.-% sekundäres Antioxidans (Typ "Weston 339" der Firma Interorgana) entsprechend Beispiel 1). Vergleiche hierzu Tabelle 2.

**Tabelle 2:**

| Bsp. | Basiszusammensetzung obere Selbstklebemasse (11) | Klebkraft [N/cm] | | Scherstandzeit [min] (Test B) | Rollweglänge [mm] (Mittelwert aus drei Messungen) (Test D) |
|---|---|---|---|---|---|
| | | Stahl (Test A2) | PE (Test A) | | |
| 2 | 45 % Kraton D1118, | 11,6 | 10,8 | 8023 | 3 |
| | 25 % Dercolyte A115, | | | | |
| | 30 % Wingtäck 10 | | | | |
| 3 | 45 % Kraton D1118, | 14,0 | 12,4 | 2750 | 27 |
| | 30 % Dercolyte A115, | | | | |
| | 25 % Wingtack 10 | | | | |
| 4 | 50 % Kraton D1118, | 14,0 | 11,0 | 14963 | 8 |
| | 30 % Dercolyte A115, | | | | |
| | 20 % Wingtack 10 | | | | |
| 5 | 50 % Kraton D1118, | 8,8 | 8,8 | 6337 | 2 |
| | 25 % Dercolyte A115, | | | | |
| | 25 % Wingtack 10 | | | | |
| 6 | 45 % Europrene SOL T-192, | 11,8 | 8,0 | 4809 | 12 |
| | 25 % Dercolyte A115, | | | | |
| | 30 % Wingtack 10 | | | | |
| 7 | 45 % Europrene SOL T-192, | 11,8 | 8,0 | 4809 | 12 |
| | 25 % Dercolyte A115, | | | | |
| | 30 % Wingtack 10 | | | | |

| | | | | | |
|---|---|---|---|---|---|
| alle Handelsnamen: ® | | | | | |

Die Verwendung derartig hergestellter Klebebänder beim fliegenden Rollenwechsel von Polyethylenfolien mit einer Stärke von 35 µm bis 60 µm verlief im Praxistest erfolgreich.

## Patentansprüche

1. Klebeband geeignet für den fliegenden Rollenwechsel von auf Rollen aufgewickeltem Flachbahnmaterial mit unpolaren Oberflächen,
das Klebeband umfassend eine obere Selbstklebemasse (1, 11), einen spaltfähigen Träger (2, 12) und eine untere Selbstklebemasse (3, 13) an der unteren Seite des spaltfähigen Trägers (2, 12),
**dadurch gekennzeichnet, dass**
als obere Selbstklebemasse (1, 11) eine silikonfreie Selbstklebemasse mit einer Klebkraft auf einem Polyethylen-Haftgrund von 1,5 N/cm oder mehr (Meßmethode tesa Test A) und einer Anfassklebrigkeit entsprechend einer Rollweglänge von 50 mm oder weniger (Meßmethode tesa Test D) verwendet wird,
wobei die obere Selbstklebemasse (1, 11) eine Selbstklebemasse auf Basis eines Gemisches aus mehreren Styrolblockcopolymeren ist, enthaltend mindestens ein Zweiblockcopolymer mit einem der Blöcke auf Styrolbasis, wobei der Styrolanteil mindestens 25 Gew.-% und/oder der Zweiblockanteil mindestens 40 Gew.-% beträgt, bezogen auf die Blockcopolymer- Gesamtmenge,
und dass als untere Selbstklebemasse (3, 13) eine harzmodifizierte Acrylatmasse oder eine zur oberen Selbstklebemasse (1, 11) identische Selbstklebemasse verwendet wird, jeweils mit einer Klebkraft auf einem Polyethylen-Haftgrund von 1,5 N/cm oder mehr (Meßmethode tesa Test A) und einer komplexen Viskosität von 10.000 Pa·s oder mehr bei 1 rad/s und 40 °C (Meßmethode tesa Test F).

2. Klebeband nach Anspruch 1, wobei als obere Selbstklebemasse (1, 11) und/oder als untere Selbstklebemasse (3, 13) eine Selbstklebemasse mit einer Klebkraft auf einem Polyethylen-Haftgrund von 3,0 N/cm oder mehr (Meßmethode tesa Test A) verwendet wird, insbesondere mit einer Klebkraft auf einem Polyethylen-Haftgrund von 5,0 N/cm oder mehr.

3. Klebeband nach einem der vorhergehenden Ansprüche, wobei als obere Selbstklebemasse (1, 11) eine Selbstklebemasse mit einer Anfassklebrigkeit entsprechend einer Rollweglänge von 40 mm oder weniger (Meßmethode tesa Test D) verwendet wird, insbesondere mit einer Anfassklebrigkeit entsprechend einer Rollweglänge von 20 mm oder weniger.

4. Klebeband nach einem der vorhergehenden Ansprüche, wobei als untere Selbstklebemasse (3, 13) eine Selbstklebemasse mit einer komplexen Viskosität von 12.000 Pa·s oder mehr (Meßmethode tesa Test F) verwendet wird.

5. Klebeband nach einem der vorangehenden Ansprüche, wobei der Styrolanteil mindestens 30 Gew.-% beträgt, und/oder der Zweiblockanteil mindestens 60 Gew.-% beträgt, bezogen auf die Blockcopolymer- Gesamtmenge.

6. Klebeband nach einem der vorhergehenden Ansprüche, wobei als harzmodifizierte Acrylatklebemasse eine Selbstklebemasse umfassend 70 bis 80 Gew.-% Acrylatklebemasse und 20 bis 30 Gew.-% Klebharz verwendet wird.

7. Klebeband nach Anspruch 6, wobei als Klebharz ein Terpenphenolharz und/oder als Acrylatklebemasse ein Copolymer aus 48,5 Gew.-% n-Butylacrylat, 48,5 Gew.-% 2-Ethylhexylacrylat, 2 Gew.-% Glycidylmethacrylat und 1 Gew.-% Acrylsäure verwendet wird.

8. Klebeband nach einem der vorhergehenden Ansprüche, weiterhin umfassend einen nichtspaltfähigen Träger (14), wobei die obere Seite des nichtspaltfähigen Trägers (14) mit der oberen Selbstklebemasse (11) beschichtet ist und zumindest ein Teil der unteren Seite des nichtspaltfähigen Trägers (14) mit der oberen Seite des spaltfähigen Trägers (12) verbunden ist.

9. Klebeband nach Anspruch 8, weiterhin umfassend eine verbindende Selbstklebemasse (15), die den zumindest einen Teil der unteren Seite des nichtspaltfähigen Trägers (14) mit der oberen Seite des spaltfähigen Trägers (12) verbindet.

10. Klebeband nach einem der vorhergehenden Ansprüche, wobei als obere Selbstklebemasse (1, 11) und/oder als untere Selbstklebemasse (3, 13) eine Selbstklebemasse mit einer komplexen Viskosität von 15.000 Pa·s oder mehr (Meßmethode tesa Test F) verwendet wird.

11. Verwendung eines Klebebands nach einem der vorhergehenden Ansprüche zum Verkleben von auf Rollen aufgewickeltem Flachbahnmaterial mit unpolaren Oberflächen im Verlauf eines fliegenden Rollenwechsels, insbesondere von Folien und/oder Vliesen.

12. Spleißverfahren für den fliegenden Rollenwechsel von auf Rollen aufgewickeltem unpolaren Flachbahnmaterial, insbesondere Folien und/oder Vliese, wobei dem Ende der obersten Bahn einer neuen Rolle eines unpolaren Flachbahnmaterials ein Klebeband gemäß einem der Ansprüche 1 bis 7 zumindest teilweise hinterklebt wird, während die untere Seite des Klebebandes mit der darunter liegenden Bahn der neuen Rolle verklebt wird und diese hierdurch sichert, worauf die so ausgerüstete neue Rolle neben einer fast gänzlich abgespulten, zu ersetzenden Rolle platziert und auf die gleiche Oberflächengeschwindigkeit beschleunigt wird, die neue Rolle dann gegen die oberste Bahn der alten Rolle gedrückt wird, wobei die offen liegende Selbstklebemasse des Klebebandes mit der alten Bahn bei im wesentlichen gleichen Geschwindigkeiten der Bahnen verklebt werden, während zugleich das spaltfähige System spaltet und die Selbstklebemassen des spaltfähigen Systems mit den beiden gespalteten Resten des spaltfähigen Trägers nicht klebend abdeckt.

## Claims

1. Adhesive tape suitable for flying splice of flat web material having non-polar surfaces which has been wound to form rolls,
the adhesive tape comprising an upper self-adhesive composition (1, 11), a splittable carrier (2, 12) and a lower self-adhesive composition (3, 13) on the bottom face of the splittable carrier (2, 12),
**characterized in that**
as upper self-adhesive composition (1, 11) a silicone-free self-adhesive composition is used which has a bond strength to a polyethylene substrate of 1.5 N/cm or more (measurement method tesa test A) and an initial tack corresponding to a rolling distance of 50 mm or less (measurement method tesa test D),
wherein the upper self-adhesive composition (1, 11) is a self-adhesive composition based on a mixture of two or more styrene block copolymers comprising at least one diblock copolymer with one of the blocks based on styrene, wherein the styrene fraction is at least 25% by weight and/or the diblock fraction is at least 40% by weight, based on the total amount of block copolymer,
and **in that** as lower self-adhesive composition (3, 13) a resin-modified acrylate composition or a self-adhesive composition identical to the upper self-adhesive composition (1, 11) is used, in each case having a bond strength to a polyethylene substrate of 1.5 N/cm or more (measurement method tesa test A) and a complex viscosity of 10 000 Pa·s or more at 1 rad/s and 40°C (measurement method tesa test F).

2. Adhesive tape according to Claim 1, wherein as upper self-adhesive composition (1, 11) and/or as lower self-adhesive composition (3, 13) a self-adhesive composition is used which has a bond strength to a polyethylene substrate of 3.0 N/cm or more (measurement method tesa test A), in particular having a bond strength to a polyethylene substrate of 5.0 N/cm or.more.

3. Adhesive tape according to one of the preceding claims, wherein as upper self-adhesive composition (1, 11) a self-adhesive composition is used which has an initial tack corresponding to a rolling distance of 40 mm or less (measurement method tesa test D), in particular having an initial tack corresponding to a rolling distance of 20 mm or less.

4. Adhesive tape according to any one of the preceding claims, wherein as lower self-adhesive composition (3, 13) a self-adhesive composition is used which has a complex viscosity of 12 000 Pa·s or more (measurement method tesa test F).

5. Adhesive tape according to one of the preceding claims, wherein the styrene fraction is at least 30% by weight and/or the diblock fraction is at least 60% by weight, based on the total amount of block copolymer.

6. Adhesive tape according to any one of the preceding claims, wherein as resin-modified acrylate adhesive a self-adhesive composition is used comprising 70% to 80% by weight of acrylate adhesive and 20% to 30% by weight of tackifier resin.

7. Adhesive tape according to Claim 6, wherein as tackifier resin a terpene phenolic resin is used and/or as acrylate adhesive a copolymer of 48.5% by weight n-butyl acrylate, 48.5% by weight 2-ethylhexyl acrylate, 2% by weight glycidyl methacrylate and 1% by weight acrylic acid is used.

8. Adhesive tape according to any one of the preceding claims, further comprising a non-splittable carrier (14), the top face of the non-splittable carrier (14) being coated with the upper self-adhesive composition (11), and at least one part of the bottom face of the non-splittable carrier (14) being drawn into the top face of the splittable carrier (12).

9. Adhesive tape according to Claim 8, further comprising a joining self-adhesive composition (15) which joins the at least one part of the bottom face of the non-splittable carrier (14) to the top face of the splittable carrier (12).

10. Adhesive tape according to any one of the preceding claims, wherein as upper self-adhesive composition (1, 11) and/or as lower self-adhesive composition (3, 13) a self-adhesive composition is used which has a complex viscosity of 15 000 Pa·s or more (measurement method tesa test F).

11. Use of an adhesive tape according to any one of the preceding claims for bonding flat web material having non-polar surfaces and which has been wound to form rolls, in the course of a flying splice, particularly of films and/or nonwovens.

12. Splicing method for flying splice of non-polar flat web material which has been wound to form rolls, especially films and/or nonwovens, wherein an adhesive tape according to any one of Claims 1 to 7 is adhered at least partly behind the end of the topmost web of a new roll of a non-polar flat web material, while the bottom face of the adhesive tape is bonded to the underneath web of the new roll and thereby secures it, after which the new roll thus equipped is placed adjacent to an almost entirely unwound roll that requires replacement, and is accelerated to the same superficial speed, and then the new roll is pressed against the topmost web of the old roll, the exposed self-adhesive composition of the adhesive tape being bonded to the old web when the webs have substantially the same speeds, while at the same time the splittable system splits, and non-adhesively masks the self-adhesive compositions of the splittable system with the two split remnants of the splittable carrier.

## Revendications

1. Bande adhésive appropriée pour le changement automatique de bobines de matériau en bande plane avec des surfaces non polaires, enroulé sur des bobines, la bande adhésive comprenant une masse autoadhésive supérieure (1, 11), un support pouvant être scindé (2, 12) et une masse autoadhésive inférieure (3, 13) sur la face inférieure du support pouvant être scindé (2, 12), **caractérisée en ce qu'**on utilise comme masse autoadhésive supérieure (1, 11) une masse autoadhésive exempte de silicone présentant une adhésivité sur un substrat d'adhérence en polyéthylène de 1,5 N/cm ou plus (procédé de mesure tesa Test A) et une pégosité correspondant à une longueur du parcours de roulement de 50 mm ou moins (procédé de mesure tesa Test D),
où la masse autoadhésive supérieure (1, 11) est une masse autoadhésive à base d'un mélange constitué par plusieurs copolymères à blocs de styrène, contenant au moins un copolymère à deux blocs avec un des blocs à base de styrène, où la proportion de styrène est d'au moins 25% en poids et/ou la proportion de deux blocs est d'au moins 40% en poids, par rapport à la quantité totale de copolymère à blocs,
et **en ce qu'**on utilise comme masse autoadhésive inférieure (3, 13) une masse d'acrylate modifiée par une résine ou une masse autoadhésive identique à la masse autoadhésive supérieure (1, 11) présentant chacune une adhésivité sur un substrat d'adhérence en polyéthylène de 1,5 N/cm ou plus (procédé de mesure tesa Test A) et une viscosité complexe de 10 000 Pa.s ou plus à 1 rad/s et 40°C (procédé de mesure tesa Test F).

2. Bande adhésive selon la revendication 1, où on utilise comme masse autoadhésive supérieure (1, 11) et/ou comme masse autoadhésive inférieure (3, 13) une masse autoadhésive présentant une adhésivité sur un substrat d'adhérence en polyéthylène de 3,0 N/cm ou plus (procédé de mesure tesa Test A), en particulier une adhésivité sur un substrat d'adhérence en polyéthylène de 5,0 N/cm ou plus.

3. Bande adhésive selon l'une quelconque des revendications précédentes, où on utilise comme masse autoadhésive supérieure (1, 11) une masse autoadhésive présentant une pégosité correspondant à une longueur du parcours de roulement de 40 mm ou moins (procédé de mesure tesa Test D), en particulier une pégosité correspondant à une longueur du parcours de roulement de 20 mm ou moins.

4. Bande adhésive selon l'une quelconque des revendications précédentes, où on utilise comme masse autoadhésive inférieure (3, 13) une masse autoadhésive présentant une viscosité complexe de 12 000 Pa.s ou plus (procédé de mesure tesa Test F).

5. Bande adhésive selon l'une quelconque des revendications précédentes, où la proportion de styrène est d'au moins 30% en poids, et/ou la proportion de deux blocs est d'au moins 60% en poids, par rapport à la quantité totale de copolymère à blocs.

6. Bande adhésive selon l'une quelconque des revendications précédentes, où on utilise comme masse adhésive d'acrylate modifiée par une résine une masse autoadhésive comprenant 70 à 80% en poids de masse adhésive d'acrylate et 20 à 30% en poids de résine adhésive.

7. Bande adhésive selon la revendication 6, où on utilise comme résine adhésive une résine de terpènephénol et/ou comme masse adhésive d'acrylate un copolymère constitué par 48,5% en poids d'acrylate de n-butyle, 48,5% en poids d'acrylate de 2-éthylhexyle, 2% en poids de méthacrylate de glycidyle et 1% en poids d'acide acrylique.

8. Bande adhésive selon l'une quelconque des revendications précédentes, comprenant en outre un support (14) ne pouvant pas être scindé, où la face supérieure du support (14) ne pouvant pas être scindé est revêtue par la masse autoadhésive (11) supérieure et au moins une partie de la face inférieure du support (14) ne pouvant pas être scindé est assemblée avec la face supérieure du support (12) pouvant être scindé.

9. Bande adhésive selon la revendication 8, comprenant en outre une masse autoadhésive d'assemblage (15) qui assemble ladite au moins une partie de la face inférieure du support (14) ne pouvant pas être scindé avec la face supérieure du support (12) pouvant être scindé.

10. Bande adhésive selon l'une quelconque des revendications précédentes, où on utilise comme masse autoadhésive supérieure (1, 11) ou comme masse autoadhésive inférieure (3, 13) une masse autoadhésive présentant une viscosité complexe de 15 000 Pa.s ou plus (procédé de mesure tesa Test F).

11. Utilisation d'une bande adhésive selon l'une quelconque des revendications précédentes pour le collage de matériau en bande avec des surfaces non polaires enroulé sur des bobines au cours d'un changement automatique de bobine, en particulier de feuilles et/ou de non-tissés.

12. Procédé de raccordement pour le changement automatique de bobines de matériau en bande plane non polaire enroulé sur des bobines, en particulier de feuilles et/ou de non-tissés, où on colle au moins partiellement sur l'extrémité de la bande supérieure d'une nouvelle bobine d'un matériau en bande plane non polaire une bande adhésive selon l'une quelconque des revendications 1 à 7, alors que la face inférieure de la bande adhésive est assemblée par collage avec la bande sous-jacente à celle-ci de la nouvelle bobine et celle-ci est ainsi assurée, puis la nouvelle bobine ainsi apprêtée est placée à côté d'une bobine à remplacer, quasiment totalement déroulée, et accélérée à la même vitesse superficielle, la nouvelle bobine est alors pressée contre la bande supérieure de l'ancienne bobine, la masse autoadhésive ouverte de la bande adhésive étant assemblée par collage avec l'ancienne bande à des vitesses essentiellement identiques des bandes, alors que simultanément, le système pouvant être scindé est scindé et recouvre de manière non adhésive les masses autoadhésives du système pouvant être scindé par les deux restes scindés du support pouvant être scindé.
